# DEMANDE DE BREVET EUROPEEN

(11) **EP 4 477 440 A1**
(43) Date de publication de la demande: **18.12.2024**
(21) Numéro de dépôt: 24179356.1
(22) Date de dépôt: 31.05.2024
(51) Int. Cl.: B60K 11/08

(54) **DISPOSITIF DE GESTION D'ENTRÉE D'AIR POUR VÉHICULE AUTOMOBILE**

(30) Priorité: 06.06.2023 FR 2305672
(71) Demandeur: Renault s.a.s, 92100 Boulogne Billancourt (FR)
(72) Inventeur: BANICA, Alin-Lucian, 062203 BUCAREST (RO)

(57) **Abrégé**

Dispositif (1) de gestion d'entrée d'air pour véhicule automobile comportant :
- Un cadre adapté à être fixé à un corps du véhicule et définissant au moins une ouverture d'entrée d'air,
- Un mécanisme d'obturation (10) configuré pour réguler le débit de l'air s'écoulant à travers l'ouverture, le mécanisme d'obturation comportant :
o une pluralité de volets (20a-d) s'étendant au moins partiellement le long de l'ouverture, les volets (20a-d) étant chacun agencés pour pivoter autour d'un axe de rotation entre une position fermée et une ou plusieurs position ouvertes laissant entrer l'air,
o un actionneur (15) relié à un volet (20a ; 20b) de la pluralité des volets (20a-d) , dit « volet principal » et configuré pour entrainer ledit volet en mouvement autour de son axe de rotation,

le mécanisme d'obturation (10) étant configuré pour permettre un déplacement partiel du volet principal (20a : 20b) indépendamment des autres volets (20b-d ; 20a, 20c-d) dits «volets secondaires ».

## Description

### Domaine technique

La présente invention concerne un dispositif de gestion d'entrée d'air pour véhicule automobile et un procédé de régulation d'entrée d'air pour ce véhicule.

### Arrière-plan technologique

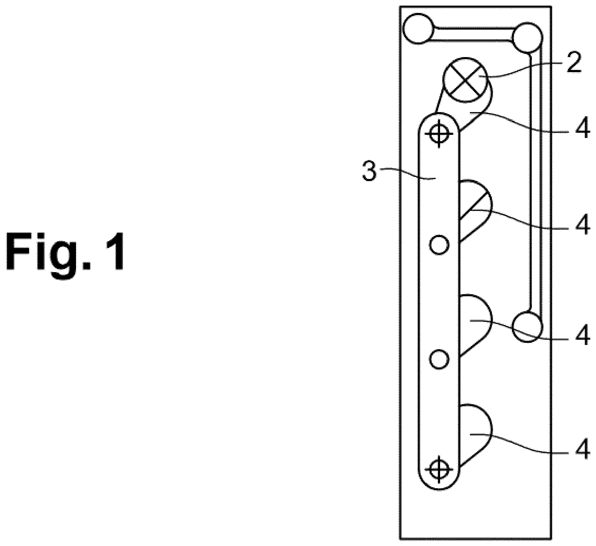

Afin d'améliorer les performances de refroidissement et de climatisation du moteur des véhicules automobiles, une solution connue consiste à utiliser un système de volets mobiles 12 pilotés à l'aide d'un actionneur 14, tel qu'illustré à la figure 1. Un tel système est le plus souvent désigné par l'acronyme AGS de la langue anglaise « *Active Grille Shutter* »*.* L'AGS est installé de manière connue au niveau d'une calandre du véhicule automobile. En position d'ouverture, l'air peut circuler depuis la calandre, permettant ainsi de refroidir le moteur. En position de fermeture, l'air ne pénètre pas via la calandre. L'obturation de l'accès de l'air permet ainsi de réduire la traînée et par conséquent de réduire la consommation d'énergie et l'émission de CO2.

Des exemples de système AGS sont décrits dans les demandes suivantes :
US10100707, US10625597, US10647194, US20230010412, et
US20190389411.

Lorsque le véhicule circule à grande vitesse, notamment à 165 km/h, les besoins en refroidissement sont accrus. Aussi, l'ouverture des volets de l'AGS s'avère indispensable. Toutefois, l'ouverture de ces volets a un impact important sur l'aérodynamique du véhicule. Une solution pourrait consister à ouvrir les volets avec un angle faible, par exemple inférieur à 15°. Cette solution a pour avantage de limiter le coefficient de traînée. Toutefois, cette solution ne donne pas entière satisfaction quant aux performances de refroidissement.

Il existe donc un besoin de disposer d'un système de volets pilotés qui permet d'améliorer les performances de refroidissement du moteur, notamment lorsque celui-ci fonctionne à grande vitesse, et ce sans impacter outre mesure la trainée du véhicule.

### Résumé de l'invention

L'invention vise à répondre à ce besoin et a pour objet un dispositif de gestion d'entrée d'air pour véhicule automobile comportant :
- Un cadre adapté à être fixé à un corps du véhicule et définissant au moins une ouverture d'entrée d'air,
- Un mécanisme d'obturation configuré pour réguler le débit de l'air s'écoulant à travers l'ouverture, le mécanisme d'obturation comportant :
   ∘ une pluralité de volets s'étendant au moins partiellement le long de l'ouverture, les volets étant pivotant autour d'un axe de rotation chacun entre une position fermée et une ou plusieurs position ouvertes laissant entrer l'air,
   ∘ Un actionneur relié à un volet de la pluralité des volets, dit « volet principal » et configuré pour entrainer ledit volet en mouvement autour de son axe de rotation,
le mécanisme d'obturation étant configuré pour permettre un déplacement partiel du volet principal indépendamment des autres volets dits «volets secondaires ».

Le déplacement partiel peut correspondre à une ouverture partielle du volet principal, c'est-à-dire à une valeur prédéfinie de l'angle d'ouverture inférieure à l'angle d'ouverture maximal dudit volet.

Dans ce qui suit, l'angle d'ouverture d'un volet est mesuré de manière à ce que lorsque ledit volet est sensiblement fermé, l'angle d'ouverture est nul.

En particulier, le mécanisme d'obturation étant agencé pour ouvrir au moins partiellement le volet principal en maintenant les volets secondaires fermés, l'angle d'ouverture dudit volet principal étant supérieur ou égal à 20.

L'ouverture d'un seul volet à un angle supérieur ou égal à 20° permet de mieux diriger l'air vers la zone désirée. Cela permet de mieux maîtriser la quantité d'air entrant ainsi que son utilisation. Les performances de refroidissement s'en trouvent améliorées, et ce en maintenant un coefficient de traînée raisonnable.

Le mécanisme d'obturation selon l'invention permet d'ouvrir sélectivement un volet de la pluralité de volets. Ce qui permet d'améliorer à la fois l'aérodynamique et les performances thermiques du véhicule.

De préférence, le mécanisme d'obturation comporte en outre une pièce de liaison reliée aux volets et reliant le volet principal aux volets secondaires, ladite pièce étant agencée pour transmettre le mouvement de pivotement du volet principal aux volets secondaires.

Avantageusement, la pièce de liaison est configurée pour transmettre le mouvement du volet principal aux volets secondaires, au-delà d'une position prédéterminée du volet principal. A titre d'exemple, en position d'ouverture, le volet principal peut pivoter sans impacter les autres volets jusqu'à atteindre un angle d'ouverture prédéterminé. A partir de cet angle d'ouverture prédéterminé, le mouvement du volet principal entraîne l'ouverture des volets secondaires.

L'angle d'ouverture prédéterminé est de préférence supérieur à 20°, mieux supérieur à 30°, notamment de l'ordre de 40° environ.

Les axes de rotation des volets sont de préférences parallèles les uns aux autres.

Chaque volet peut comporter une pièce centrale de forme allongée s'étendant au moins partiellement le long de l'ouverture d'entrée d'air et deux bras disposés de part et d'autre de la pièce centrale et destinés chacun à être articulés sur le cadre via des axes de pivotement, les bras du volet principal présentant une longueur supérieure à celle des bras des volets secondaires. La longueur est calculée le long d'un axe longitudinal du bras.

De préférence, la pièce de liaison comporte des premiers orifices pour recevoir les bras du volet principal et des deuxièmes orifices pour recevoir les bras des volets secondaires, les premiers orifices présentant une forme différente des deuxièmes orifices.

En particulier, les premiers orifices sont de forme allongée et les deuxièmes orifices sont de forme ronde.

La forme allongée permet un déplacement des axes de pivotement du volet principal le long de ces orifices lors du pivotement du volet principal. Autrement dit, le pivotement du volet principal s'accompagne d'un déplacement des axes de pivotement le long d'une direction, notamment longitudinale, des premiers orifices. Quand les axes de pivotement atteignent les extrémités des orifices, le mouvement du volet principal est transmis aux volets secondaires. Entre les extrémités des ouvertures, le mouvement du volet peut être découplé de celui des volets secondaires, c'est-à-dire il peut s'effectuer indépendamment des volets secondaires.

De préférence, la longueur des premiers orifices étant choisie en fonction de l'angle d'ouverture prédéterminé mentionné plus haut.

L'invention a encore pour objet un procédé de régulation d'entrée d'air pour un véhicule automobile à l'aide d'un dispositif selon l'invention, comportant une première étape dans laquelle le mouvement du volet principal est découplé du mouvement des volets secondaires.

La première étape peut comporter l'ouverture du volet principal en maintenant les volets secondaires fermés, l'angle d'ouverture dudit volet principal étant supérieur ou égal à 20°.

Le procédé peut comporter une deuxième étape dans laquelle le mouvement du volet principal est couplé au mouvement des volets secondaires.

La deuxième étape peut comporter l'ouverture de l'ensemble des volets.

L'invention a encore pour objet un véhicule comportant un dispositif de gestion d'entrée selon l'invention.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[fig. 1] La figure 1 représente un système de grille de l'art antérieur;
[fig. 2] La figure 2 est une représentation schématique et partielle d'un dispositif de gestion d'entrée d'air selon un premier mode de réalisation,
[fig. 3] La figure 3 représente schématiquement et partiellement une variante du dispositif de la figure 2,
[fig. 4a] La figure 4a illustre le flux d'air circulant dans une configuration de l'art antérieur,
[fig. 4b] La figure 4b illustre le flux d'air circulant dans une configuration selon l'invention, et
[fig. 5] La figure 5 est une comparaison des performances thermiques de la configuration de la figure 4a et celle de la figure 4b.

### Description de mode(s) de réalisation

Dans les figures, et à moins qu'il n'en soit disposé autrement, les éléments identiques porteront les mêmes signes de référence.

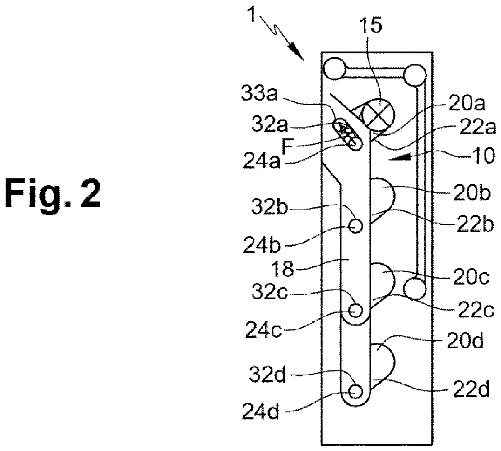

On a représenté à la figure 2, un exemple de dispositif de gestion d'entrée d'air 1 pour véhicule automobile selon l'invention.

Ce dispositif 1 comporte un cadre (non représenté) adapté à être fixé à un corps du véhicule et définissant une ou plusieurs ouvertures d'entrée d'air.

Le dispositif comporte en outre un mécanisme d'obturation 10 configuré pour réguler un débit de l'air s'écoulant à partir de la ou des ouvertures.

Comme illustré, le mécanisme d'obturation 10 comporte une pluralité de volets 20a-d, en nombre de quatre dans cet exemple, s'étendant au moins partiellement le long de la ou les ouvertures d'entrée d'air. Chaque volet est mobile en pivotement autour d'un axe de pivotement, entre une position fermée et une position ouverte. Dans cet exemple, les axes de pivotement sont parallèles les uns aux autres. Chaque volet 20a-d comporte une pièce centrale de forme allongée (non représentée) s'étendant au moins partiellement le long de l'ouverture d'entrée d'air et deux bras 22a-d disposés de part et d'autre de la pièce centrale et destinés chacun à être articulés sur le cadre via un axe de pivotement 24a-d.

Le mécanisme d'obturation 10 comporte également un actionneur 15 relié au volet 20a de la pluralité des volets, dit « volet principal ». Cet actionneur entraine ledit volet 20a en mouvement autour de son axe de rotation.

Les autres volets 20b-d ou « volets secondaires » sont reliés au volet principal 20a, et par conséquent à l'actionneur 15, par une pièce de liaison 18. Cette pièce de liaison permet de transmettre le mouvement de pivotement du volet principal 22a aux volets secondaires 22b-d. Dans l'exemple illustré, la pièce de liaison 18 est sous forme de bielle.

Comme illustré, la pièce de maintien comporte une pluralité d'orifices 32 pour recevoir les axes de pivotement des volets. Cette pluralité d'orifices comporte des premiers orifices 32a recevant les axes de pivotement 24a du volet principal 20a et des deuxièmes orifices 32b-d de forme ronde recevant les axes de pivotement 24b-d des volets secondaires.

Les premiers orifices présentent une forme allongée. Grâce à cette forme, les axes de pivotement peuvent se déplacer le long des orifices selon une direction longitudinale, indiquée par la flèche F, lorsque le volet principal est entraîné en pivotement par l'actionneur. Aussi, dans une plage d'angle prédéterminée, notamment avant que l'axe de pivotement 24a n'atteigne l'extrémité 33a de l'orifice 32a, le volet principal 20a peut pivoter seul sans impacter les volets secondaires 20b-d. La forme de la pièce de liaison 18 ainsi décrite permet un déplacement partiel du volet principal 20a indépendamment des volets secondaires 20b-d.

En particulier, cela permet d'ouvrir le volet principal 20a en maintenant les volets secondaires 20b-d fermés, avec un angle d'ouverture dudit volet principal supérieur ou égal à 20°.

Lorsque l'axe de pivotement 24a du volet principal 20a atteint l'extrémité 33a de l'orifice 32a, le mouvement du volet principal 20a est alors couplé aux volets secondaires 20b-d par l'intermédiaire de la pièce de liaison 18, entrainant ainsi le pivotement des volets secondaires.

Aussi, en fonction des besoins en refroidissement, il est possible d'ouvrir le volet principal 20a seul ou l'ensemble des volets 20a-d. Dans ce cas dernier, l'ouverture des volets 20a-d peut se faire en deux temps. Dans un premier temps, seul le volet principal 20a est ouvert avec un angle d'ouverture supérieur à 20°. Ensuite, les volets secondaires 20b-d s'ouvrent en suivant le mouvement du volet principal 20a.

L'invention n'est pas limitée à l'exemple qui vient d'être décrit.

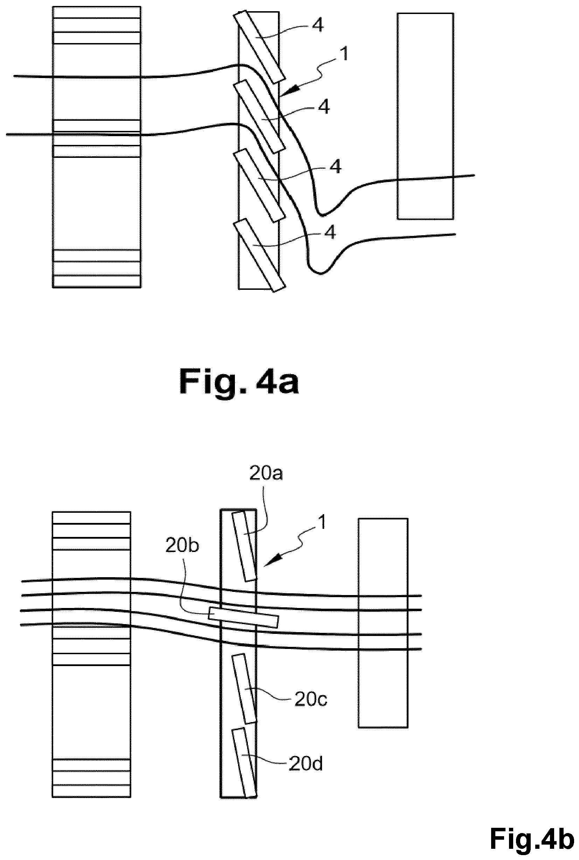

Par exemple, l'actionneur peut être relié à un volet différent du premier, comme illustré à la figure 4b. Dans cet exemple, le volet principal correspond au second volet 22b. A l'instar de ce qui a été décrit plus haut, l'ouverture 32b de la pièce de liaison 18 présente une forme allongée permettant de découpler le mouvement du volet principal 20b de celui des volets secondaires 20a et 20c-d jusqu'à un angle d'ouverture prédéterminé. Au-delà de cet angle, l'ouverture du volet principal 20b entraîne celle des volets secondaires 20a et 20c-d.

La figure 4a montre la circulation de l'air pour une configuration classique d'un dispositif de l'art antérieur où tous les volets 20a-d sont ouverts avec un angle d'ouverture faible, par exemple égal à 12°. L'ouverture des volets avec un faible angle permet de ne pas impacter considérablement la traînée du véhicule.

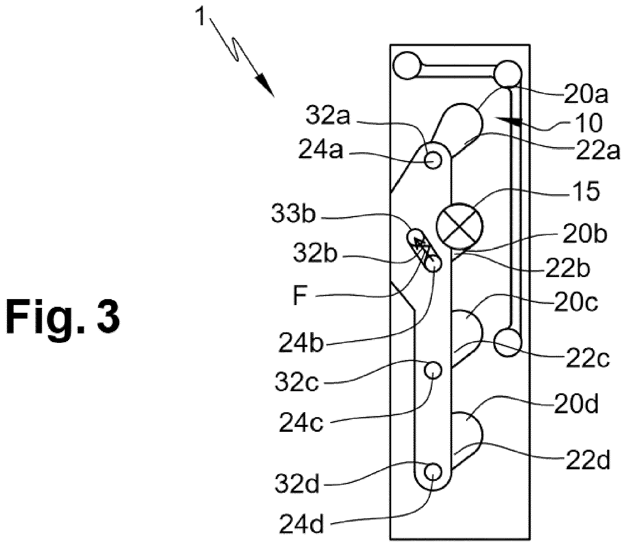

La figure 4a montre le flux d'air dans une configuration selon le dispositif de la figure 3 dans laquelle seul le volet 20b est ouvert avec un angle d'ouverture égal à 38° environ. Le coefficient de traînée dans ce cas est comparable à celui de la configuration de la figure 4a. Toutefois et comme cela est visible, la configuration de la figure 4b permet de mieux orienter l'air entrant vers la zone à refroidir souhaitée, en comparaison avec le cas où tous les volets sont ouverts (figure 4a).

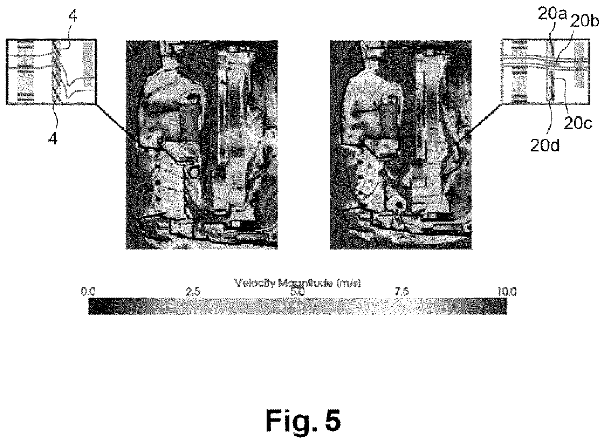

Pour un coefficient de traînée comparable, le dispositif selon l'invention présente des performances thermiques améliorées, comme cela est visible à la figure 5.

## Revendications

1. Dispositif (1) de gestion d'entrée d'air pour véhicule automobile comportant :
- Un cadre adapté à être fixé à un corps du véhicule et définissant au moins une ouverture d'entrée d'air,
- Un mécanisme d'obturation (10) configuré pour réguler le débit de l'air s'écoulant à travers l'ouverture, le mécanisme d'obturation comportant :
∘ une pluralité de volets (20a-d) s'étendant au moins partiellement le long de l'ouverture, les volets (20a-d) étant chacun agencés pour pivoter autour d'un axe de rotation entre une position fermée et une ou plusieurs position ouvertes laissant entrer l'air,
∘ Un actionneur (15) relié à un volet (20a ; 20b) de la pluralité des volets (20a-d) , dit « volet principal » et configuré pour entrainer ledit volet en mouvement autour de son axe de rotation,
le mécanisme d'obturation (10) étant configuré pour permettre un déplacement partiel du volet principal (20a ; 20b) indépendamment des autres volets (20b-d ; 20a, 20c-d) dits «volets secondaires ».

2. Dispositif selon la revendication 1, le mécanisme d'obturation (10) comportant en outre une pièce de liaison (18) reliée aux volets et reliant le volet principal (20a ; 20b) aux volets secondaires, ladite pièce de liaison étant agencée pour transmettre le mouvement de pivotement du volet principal aux volets secondaires.

3. Dispositif selon la revendication 1 ou 2, le mécanisme d'obturation étant agencé pour permettre l'ouverture au moins partielle du volet principal (20a ; 20b) en maintenant les volets secondaires fermés, l'angle d'ouverture dudit volet principal étant supérieur ou égal à 20°.

4. Dispositif selon l'une quelconque des revendications précédentes, chaque volet (20a-d) comportant une pièce centrale de forme allongée s'étendant au moins partiellement le long de l'ouverture d'entrée d'air et deux bras (22a-d) disposés de part et d'autre de la pièce centrale et destinés chacun à être articulés sur le cadre via des axes de pivotement (24ad), les bras (22a ; 22b) du volet principal (20a ; 20b) présentant une longueur supérieure à celle des bras des volets secondaires.

5. Dispositif selon l'une quelconque des revendications précédentes, la pièce de liaison (18) comportant des premiers orifices (32a ; 32b) pour recevoir les bras (22a ; 22b) du volet principal (20a ; 20b) et des deuxièmes orifices (32b-d ; 32a, 32c-d) pour recevoir les bras des volets secondaires, les premiers orifices présentant une forme différente des deuxièmes orifices.

6. Dispositif selon la revendication précédente, les premiers orifices (32a ; 32b) étant de forme allongée.

7. Dispositif selon la revendication précédente, dans lequel le pivotement du volet principal (20a ; 20b) s'accompagne d'un déplacement des axes de pivotement le long d'une direction, notamment longitudinale, des premiers orifices (32a ; 32b).

8. Procédé de régulation d'entrée d'air pour un véhicule automobile à l'aide d'un dispositif selon l'une quelconque des revendications précédentes, comportant une première étape dans laquelle le mouvement du volet principal (32a ; 32b) est découplé du mouvement des volets secondaires.

9. Procédé selon la revendication précédente, comportant une deuxième étape dans laquelle le mouvement du volet principal (32a ; 32b) est couplé au mouvement des volets secondaires.

10. Procédé selon la revendication 8 ou 9, la première étape comportant l'ouverture du volet principal (32a ; 32b) en maintenant les volets secondaires fermés, l'angle d'ouverture dudit volet principal étant supérieur ou égal à 20°.

11. Véhicule comportant un dispositif (1) de gestion d'entrée selon l'une quelconque des revendications 1 à 7.
